# EUROPEAN PATENT APPLICATION

(11) **EP 4 737 533 A1**
(43) Date of publication of application: **06.05.2026**
(21) Application number: 24831931.1
(22) Date of filing: 25.06.2024
(51) Int. Cl.: C09K 5/04, F25B 1/00

(54) **METHOD FOR SUPPRESSING DISPROPORTIONATION REACTION OF WORKING MEDIUM FOR REFRIGERATION CYCLES, WORKING MEDIUM FOR REFRIGERATION CYCLES, AND REFRIGERATION CYCLE DEVICE**

(30) Priority: 30.06.2023 JP 2023108186
(71) Applicant: Panasonic Intellectual Property Management Co., Ltd., Kadoma-shi, Osaka 571-0057 (JP)
(72) Inventor: SAKATA, Naoya, Kadoma-shi, Osaka 571-0057 (JP); MURAKAMI, Hikaru, Kadoma-shi, Osaka 571-0057 (JP); TSUNOYAMA, Hironori, Kadoma-shi, Osaka 571-0057 (JP); HASHIMOTO, Takahiko, Kadoma-shi, Osaka 571-0057 (JP)
(74) Representative: Eisenführ Speiser
(86) International application number: PCT/JP2024/022939
(87) International publication number: WO 2025/005071

(57) **Abstract**

Disclosed is a method of inhibiting a disproportionation reaction of a refrigeration-cycle working medium containing a refrigerant component that causes the disproportionation reaction, wherein in a refrigeration cycle in which the refrigeration-cycle working medium circulates, the refrigeration-cycle working medium contains a carbonyl compound, and the carbonyl compound includes, in its chemical structure, a carbon-oxygen double bond (C=O bond) that reacts with a carbene and at least one alpha hydrogen atom, the method including inhibiting the disproportionation reaction of the refrigerant component in such a manner that the carbonyl compound captures the carbene generated by the disproportionation reaction of the refrigerant component.

## Description

### Technical Field

The present invention relates to a method of inhibiting a refrigeration-cycle working medium which can effectively inhibit or mitigate a disproportionation reaction of fluoroolefin (fluoroalkene), such as 1,1,2-trifluoroethylene, and a refrigeration-cycle working medium which uses this method.

### Background Art

As a refrigeration-cycle working medium (a refrigerant or a heat medium), the use of fluoroolefin having an ozone depletion potential (ODP) of 0 and a lower global warming potential (GWP), especially hydrofluoroolefin (HFO), has been recently proposed. Known as representative HFOs are, for example, 1,1,2-trifluoroethylene (HFO1123) and difluoroethylene (HFO1132). The HFOs are lower in stability than conventional HFCs (hydrofluorocarbons) and the like. Therefore, the HFOs hardly remain in the atmosphere.

It is also known that since the stability of the HFO is low, a self-polymerization reaction which is called a disproportionation reaction tends to occur (such reaction is hereinafter referred to as the disproportionation reaction). The disproportionation reaction tends to occur by being induced by, for example, heat generated during the use of the refrigeration-cycle working medium. In addition, it is also known that since large heat dissipation is caused by the occurrence of the disproportionation reaction, the disproportionation reactions occur successively. As a result, a large amount of soot is generated, and this may deteriorate the reliability of a refrigeration cycle system or the reliability of a compressor and the like constituting the refrigeration cycle system.

The present applicants propose that when, for example, 1,1,2-trifluoroethylene is used as a refrigerant component of the refrigeration-cycle working medium, halomethanes (PTL 1), saturated hydrocarbons (PTL 2), haloethanes (PTL 3), a combination of these (PTL 4 or PTL 5), or difluoroiodomethane (PTL 6) as a representative example of an especially suitable disproportionation inhibitor is used as a component (disproportionation inhibitor) that inhibits the disproportionation reaction of the 1,1,2-trifluoroethylene.

### Citation List

### Patent Literature

PTL 1: Japanese Laid-Open Patent Application Publication No. 2017-145380
PTL 2: Japanese Laid-Open Patent Application Publication No. 2018-048271
PTL 3: Japanese Laid-Open Patent Application Publication No. 2018-104565
PTL 4: Japanese Laid-Open Patent Application Publication No. 2018-104566
PTL 5: Japanese Laid-Open Patent Application Publication No. 2019-034983
PTL 6: Japanese Laid-Open Patent Application Publication No. 2021-161316

### Summary of Invention

### Technical Problem

In consideration of various conditions that may affect the occurrence of the disproportionation reaction in a refrigeration cycle, PTLs 1 to 6 propose various disproportionation inhibitors and combinations thereof. These disproportionation inhibitors can effectively inhibit or mitigate the disproportionation reaction of fluoroolefin, such as 1,1,2-trifluoroethylene.

However, there remain many unknown points regarding the disproportionation reaction of the fluoroolefin. Therefore, in addition to the disproportionation inhibitors proposed in PTLs 1 to 6, it is required to consider a new method that can effectively inhibit or mitigate the disproportionation reaction.

The present invention was made to solve the above problem, and an object of the present invention is to provide a new method of effectively inhibiting or mitigating a disproportionation reaction of fluoroolefin in a refrigeration-cycle working medium which contains the fluoroolefin as a refrigerant component.

### Solution to Problem

The present inventors have diligently studied to solve the above problem. As a result, the present inventors have uniquely found that: a carbonyl compound, which has not been considered at all so far in the field regarding the inhibiting of the disproportionation reaction, may contribute to the inhibiting or mitigating of the disproportionation reaction; and the carbonyl compound acts on not an active radical generated in association with the self-decomposition of the fluoroolefin but a carbene. Thus, the present invention has been made.

To solve the above problem, a method of inhibiting a disproportionation reaction of a refrigeration-cycle working medium according to the present disclosure is a method of inhibiting a disproportionation reaction of a refrigeration-cycle working medium containing a refrigerant component that causes the disproportionation reaction, wherein in a refrigeration cycle in which the refrigeration-cycle working medium circulates, the refrigeration-cycle working medium contains a carbonyl compound, and the carbonyl compound includes, in its chemical structure, a carbon-oxygen double bond (C=O bond) that reacts with a carbene and at least one alpha hydrogen atom, the method including inhibiting the disproportionation reaction of the refrigerant component in such a manner that the carbonyl compound captures the carbene generated by the disproportionation reaction of the refrigerant component.

According to the above configuration, the carbonyl compound that is propionaldehyde, acetone, cyclopropanone, acetaldehyde, or a derivative of any of these compounds which includes three carbon atoms or less, and includes at least one alpha hydrogen atom in its molecular structure is added as the carbene scavenger to the refrigerant component.

According to diligent studies by the present inventors, it was found that the carbene generated in association with the self-decomposition of the refrigerant component is involved in the chain progression of the disproportionation reaction of the refrigerant component. According to the above configuration, this carbene is captured by the carbonyl compound that is the carbene scavenger. Thus, since the increase of the carbene in the refrigeration cycle can be effectively inhibited, the disproportionation reaction of the refrigerant component can be inhibited or mitigated.

In addition, although the refrigerant component has a self-decomposing property, the carbonyl compound that is the carbene scavenger does not have the self-decomposing property. Therefore, when the carbonyl compound is contained in the refrigeration-cycle working medium, the stability of the working medium can be made relatively high.

Moreover, the present disclosure also includes a method of capturing a carbene existing in a refrigeration cycle including a refrigeration-cycle composition, wherein in the refrigeration cycle, the refrigeration-cycle composition contains a carbonyl compound, and the carbonyl compound includes, in its chemical structure, a carbon-oxygen double bond (C=O bond) that reacts with the carbene and at least one alpha hydrogen atom, the method including capturing the carbene existing in the refrigeration cycle in such a manner that the carbonyl compound reacts with the carbene existing in the refrigeration cycle.

Moreover, the present disclosure also includes a refrigeration-cycle composition including: a refrigerant component that causes a disproportionation reaction; and a carbonyl compound including, in its chemical structure, a carbon-oxygen double bond (C=O bond) and at least one alpha hydrogen atom. Furthermore, the present disclosure also includes a refrigeration cycle apparatus including this refrigeration-cycle composition.

The above object, other objects, features, and advantages of the present invention will be made clear by the following detailed explanation of preferred embodiments with reference to the attached drawings.

### Advantageous Effects of Invention

According to the above configurations, the present invention achieves an effect of being able to provide a new method of effectively inhibiting or mitigating the disproportionation reaction of the fluoroolefin in the refrigeration-cycle working medium which contains the fluoroolefin as the refrigerant component.

### Brief Description of Drawings

FIG. 1 is a schematic diagram showing one example of a state where a carbonyl compound that is a carbene scavenger reacts with a carbene to generate an ether compound that is a singlet ground-state molecule in the present disclosure.
FIG. 2 is a schematic diagram showing major elements in a compressor included in a refrigeration cycle according to an embodiment of the present disclosure.
FIGS. 3A and 3B are schematic block diagrams each showing one example of a refrigeration cycle system to which the refrigeration cycle according to the embodiment of the present disclosure is applied.

### Description of Embodiments

A method of inhibiting a disproportionation reaction of a refrigeration-cycle working medium according to the present disclosure is a method of inhibiting a disproportionation reaction of a refrigeration-cycle working medium containing a refrigerant component that causes the disproportionation reaction, wherein in a refrigeration cycle in which the refrigeration-cycle working medium circulates, the refrigeration-cycle working medium contains a carbonyl compound, and the carbonyl compound includes, in its chemical structure, a carbon-oxygen double bond (C=O bond) that reacts with a carbene and at least one alpha hydrogen atom, the method including inhibiting the disproportionation reaction of the refrigerant component in such a manner that the carbonyl compound captures the carbene generated by the disproportionation reaction of the refrigerant component.

According to the above configuration, the carbonyl compound that is propionaldehyde, acetone, cyclopropanone, acetaldehyde, or a derivative of any of these compounds which includes three carbon atoms or less, and includes at least one alpha hydrogen atom in its molecular structure is added as the carbene scavenger to the refrigerant component.

According to diligent studies by the present inventors, it was found that the carbene generated in association with the self-decomposition of the refrigerant component is involved in the chain progression of the disproportionation reaction of the refrigerant component. According to the above configuration, this carbene is captured by the carbonyl compound that is the carbene scavenger. Thus, since the increase of the carbene in the refrigeration cycle can be effectively inhibited, the disproportionation reaction of the refrigerant component can be inhibited or mitigated.

In addition, although the refrigerant component has a self-decomposing property, the carbonyl compound that is the carbene scavenger does not have the self-decomposing property. Therefore, when the carbonyl compound is contained in the refrigeration-cycle working medium, the stability of the working medium can be made relatively high.

In the above method of inhibiting the disproportionation reaction of the refrigeration-cycle working medium, the carbonyl compound may be propionaldehyde, acetone, cyclopropanone, acetaldehyde, or a derivative of any of these compounds which includes three carbon atoms or less.

Moreover, in the above method of inhibiting the disproportionation reaction of the refrigeration-cycle working medium, the carbene may include at least one selected from the group consisting of CF₂, CHF, and CH₂.

Moreover, in the above method of inhibiting the disproportionation reaction of the refrigeration-cycle working medium, the reaction between the carbonyl compound and the carbene may include converting the carbonyl compound into an ether compound, and the ether compound may include four carbon atoms or less and include, as a terminal substituent of its molecular structure, at least one selected from the group consisting of a methyl group (CH₃), a monofluoromethyl group (CH₂F), and a difluoromethyl group (CHF₂).

Moreover, in the above method of inhibiting the disproportionation reaction of the refrigeration-cycle working medium, inhibiting the disproportionation reaction of the refrigerant component may include inhibiting an increase of the carbene in the refrigeration cycle, and inhibiting the increase of the carbene may include a process in which a concentration of the carbene falls below a preset upper limit of the concentration of the carbene or a process in which the concentration of the carbene is set to practically zero.

Moreover, in the above method of inhibiting the disproportionation reaction of the refrigeration-cycle working medium, the refrigeration cycle may include a compressor, the compressor may include an electric discharge region where electric discharge occurs and a slide region including a slide portion where a plurality of slide members slide in a state where sliding surfaces thereof are in contact with each other, and inhibiting the disproportionation reaction of the refrigerant component may include inhibiting an increase of the carbene existing in at least one of the electric discharge region or the slide region.

Moreover, in the above method of inhibiting the disproportionation reaction of the refrigeration-cycle working medium, a mole fraction of the carbene existing in at least one of the electric discharge region or the slide region may be set to 0.35 or less.

Moreover, in the above method of inhibiting the disproportionation reaction of the refrigeration-cycle working medium, the increase of the carbene may be inhibited by controlling a temperature in at least one of the electric discharge region or the slide region to 700 K or less.

Moreover, in the above method of inhibiting the disproportionation reaction of the refrigeration-cycle working medium, the increase of the carbene may be inhibited by controlling pressure in at least one of the electric discharge region or the slide region from a high-temperature high-pressure state to 2 MPa or less.

A method of capturing a carbene existing in a refrigeration cycle according to the present disclosure is a method of capturing a carbene existing in a refrigeration cycle including a refrigeration-cycle composition, wherein in the refrigeration cycle, the refrigeration-cycle composition contains a carbonyl compound, and the carbonyl compound includes, in its chemical structure, a carbon-oxygen double bond (C=O bond) that reacts with the carbene and at least one alpha hydrogen atom, the method including capturing the carbene existing in the refrigeration cycle in such a manner that the carbonyl compound reacts with the carbene existing in the refrigeration cycle.

Moreover, a refrigeration-cycle composition according to the present disclosure includes: a refrigerant component that causes a disproportionation reaction; and a carbonyl compound including, in its chemical structure, a carbon-oxygen double bond (C=O bond) and at least one alpha hydrogen atom.

In the above refrigeration-cycle composition, the carbonyl compound may be propionaldehyde, acetone, cyclopropanone, acetaldehyde, or a derivative of any of these compounds which includes three carbon atoms or less.

Moreover, in the above refrigeration-cycle composition, the carbonyl compound may be aldehyde or ketone having a structure represented by Formula (1), 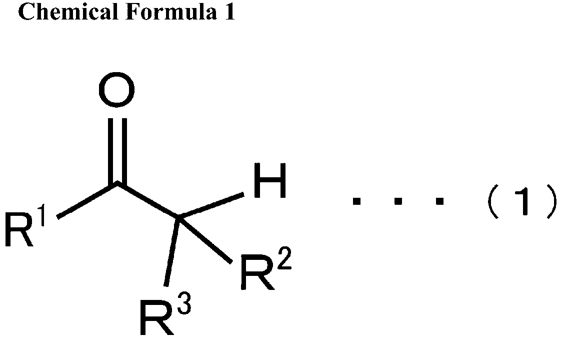 where each of R¹, R², and R³ is independently an atom or an atomic group selected from the group consisting of H, F, Cl, Br, I, CH₃, CF₃, OCH₃, SCH₃, and NH₂.

Moreover, in the above refrigeration-cycle composition, the refrigerant component may be ethylene based fluoroolefin.

Moreover, in the above refrigeration-cycle composition, the carbonyl compound may be contained in an amount of 50 parts by mass or less relative to 100 parts by mass of the ethylene based fluoroolefin.

Moreover, in the above refrigeration-cycle composition, the carbonyl compound may be aldehyde or ketone in which each R in Formula (1) above is independently an atom or an atomic group selected from the group consisting of H, CH₃, OCH₃, SCH₃, and NH₂, and the carbonyl compound may be contained in an amount of 20 parts by mass or less relative to 100 parts by mass of the ethylene based fluoroolefin.

Moreover, in the above refrigeration-cycle composition, the carbonyl compound may be 1,1,1-trifluoroacetone (CF₃-CO-CH₃), 1,1,1,3,3-pentafluoroacetone (CF₃-CO-CHF₂), 1,1,1,3-tetrafluoroacetone (CF₃-CO-CH₂F), or acetone (CH₃-CO-CH₃).

Moreover, the above refrigeration-cycle composition may further include difluoromethane.

Moreover, the above refrigeration-cycle composition may further include saturated hydrocarbon.

Moreover, the above refrigeration-cycle composition may include haloalkane including one or two carbon atoms.

Furthermore, the present disclosure also includes a refrigeration cycle apparatus including the above refrigeration-cycle composition.

Hereinafter, a representative embodiment of a method of inhibiting a disproportionation reaction of a refrigeration-cycle composition according to the present disclosure, a representative mode of use of this method, and the like will be specifically described.

### Fluoroolefin

In the refrigeration-cycle working medium according to the present disclosure which is a target of the method of inhibiting the disproportionation reaction according to the present disclosure, at least the fluoroolefin (fluoroalkene) that causes the disproportionation reaction is used as the refrigerant component.

Specific examples of the fluoroolefin that causes the disproportionation reaction include ethylene based fluoroolefin s, such as 1,1,2-trifluoroethylene (CF₂ = CHF, HFO1123), trans-1,2-difluoroethylene (CHF = CHF(E), HFO1132(E)), cis-1,2-difluoroethylene (CHF = CHF(Z), HFO1132(Z)), 1,1-difluoroethylene (CF₂ = CH₂, HFO1132a), tetrafluoroethylene (CF₂= CF₂, FO1114), and monofluoroethylene (CFH = CH₂, HFO1141). However, the fluoroolefin that causes the disproportionation reaction is not especially limited. Only one of these fluoroolefins may be used as the refrigerant component, or a combination of two or more of the fluoroolefins may be used as the refrigerant component.

The fluoroolefin includes an ethylene structure as a backbone, i.e., a double bond between a carbon atom and a carbon atom, and includes such a chemical structure that at least one of two hydrogen atoms bonded to one of the carbon atoms is replaced with a fluorine atom, or at least one of four hydrogen atoms bonded to both of the carbon atoms is replaced with a fluorine atom. In the fluoroolefin, at least one of the hydrogen atoms may be replaced with another atom or another substituent.

For example, the 1,1,2-trifluoroethylene includes such a structure that: both of two hydrogen atoms bonded to one of the carbon atoms (i.e., the carbon atom at a first position) of the ethylene structure are replaced with fluorine atoms; and one of two hydrogen atoms bonded to the other carbon atom (i.e., the carbon atom at a second position) is replaced with a fluorine atom.

Or, the trans-1,2-difluoroethylene has such a structure that: one of two hydrogen atoms bonded to the carbon atom at the first position in the ethylene structure is replaced with a fluorine atom; and between two hydrogen atoms bonded to the carbon atom at the second position, only the hydrogen atom at a position which is not adjacent to the fluorine atom bonded to the carbon atom at the first position but is opposed to the fluorine atom, which is bonded to the carbon atom at the first position, across the double bond is replaced with a fluorine atom.

Since such fluoroolefin includes the ethylene backbone, i.e., the carbon-carbon double bond as described above, the double bond is easily decomposed. To be specific, ozone in the atmosphere generates hydroxyl radicals (OH radicals) by a photochemical reaction. And, since the hydroxyl radicals can cause an addition reaction with respect to the double bond, the fluoroolefin is easily decomposed. Therefore, the fluoroolefin is less likely to influence ozone layer depletion and global warming.

It is also known that the fluoroolefin causes a rapid disproportionation reaction by the above-described good decomposing property. As one representative example of the fluoroolefin, 1,1,2-trifluoroethylene will be described. In this disproportionation reaction, a self-decomposition reaction in which molecules of the 1,1,2-trifluoroethylene are decomposed occurs, and after this self-decomposition reaction, a polymerization reaction in which active radicals or carbenes (hereinafter collectively referred to as active species) produced by the decomposition react with the 1,1,2-trifluoroethylene located nearby, a sooting reaction in which carbon fragments generated by dissociation polymerize to form soot, or the like occurs. When the active species are generated by heat generation or the like in a high-temperature high-pressure state, the active species and the 1,1,2-trifluoroethylene repeatedly cause the polymerization reaction, the sooting reaction, or both of them to cause the disproportionation reaction. Since this disproportionation reaction generates heat, the active radicals are generated by this heat generation, and the disproportionation reaction is induced by the active radicals. As above, since the generation of the active radicals and the occurrence of the disproportionation reaction are caused successively, and a spontaneous self-decomposition reaction propagates to other 1,1,2-trifluoroolefin, the disproportionation reaction rapidly proceeds.

Previously, the present applicants have diligently studied and found that the active radicals that induce the disproportionation reaction of the 1,1,2-trifluoroethylene mainly include fluorine radicals (F radicals) and also include radicals, such as trifluoromethyl radicals (CF₃ radicals).

Therefore, the present applicants have tried to inhibit or mitigate the rapid disproportionation reaction in such a manner that under the condition that difluoromethane is used as the refrigerant component together with the fluoroolefin, such as 1,1,2-trifluoroethylene, which causes the disproportionation reaction, a substance (disproportionation inhibitor) that can efficiently capture F radicals, CF₃ radicals, CF₂ radicals, and the like is added to the refrigeration-cycle working medium. As a result, the present applicants have uniquely found that a suitable disproportionation inhibitor may be obtained by the addition of the disproportionation inhibitors disclosed in PTLs 1 to 6.

The present inventors have further studied and newly found that the disproportionation reaction of the fluoroolefin can be effectively inhibited or mitigated by adding a carbonyl compound to the refrigeration-cycle working medium which contains the fluoroolefin. In addition, the present applicants have newly found that: unlike the disproportionation inhibitors which have been proposed by the present applicants so far, the carbonyl compound does not capture the radical but captures the carbene; and the carbene may be involved in the rapid progression of the disproportionation reaction of the fluoroolefin.

### Carbonyl Compound as Carbene Scavenger

In the method of inhibiting the disproportionation reaction of the refrigeration-cycle working medium according to the present disclosure, when the carbene is generated in association with the disproportionation reaction of the fluoroolefin in the refrigeration cycle in which the refrigeration-cycle working medium containing the fluoroolefin circulates, the refrigeration-cycle working medium contains the carbonyl compound as the carbene scavenger. To be specific, the refrigeration-cycle working medium according to the present disclosure contains the fluoroolefin as the refrigerant component and also contains the carbonyl compound as the carbene scavenger.

In the present disclosure, the carbonyl compound used as the carbene scavenger may be a compound that is propionaldehyde, acetone, cyclopropanone, acetaldehyde, or a derivative of any of these compounds which includes three carbon atoms or less, and includes at least one alpha hydrogen atom (α hydrogen) in its molecular structure. To be specific, in the present disclosure, the carbene scavenger may be a compound that is aldehyde including three carbon atoms or less, ketone including three carbon atoms or less, or a derivative of the aldehyde or the acetone, and includes at least one α hydrogen in its molecular structure.

In a compound (carbonyl compound) including a carbonyl group (C=O), α hydrogen is a hydrogen atom bonded to a carbon atom (α carbon) at an alpha-position (α-position) directly bonded to a carbon atom of the carbonyl group. In the present disclosure, the carbonyl compound used as the carbene scavenger may include one or more α hydrogens in its molecular structure.

For example, the propionaldehyde (propanal) has a molecular structure in which a hydrogen atom and an ethyl group (CH₃CH₂) are bonded to a carbon atom of a carbonyl group. Therefore, the propionaldehyde (propanal) includes one α carbon and two α hydrogens. Moreover, the acetone (propane-2-one) has a molecular structure in which two methyl groups (CH₃) are bonded to a carbon atom of a carbonyl group. Therefore, the acetone (propane-2-one) includes two α carbons and six α hydrogens. The cyclopropanone includes two α carbons and four α hydrogens, and the acetaldehyde (ethanal) includes one α carbon and three α hydrogens.

In the present disclosure, a more specific type of the carbonyl compound that is the carbene scavenger is not especially limited. As described above, the carbonyl compound may be a compound that is propionaldehyde, acetone, cyclopropanone, acetaldehyde, or a derivative of any of these compounds which includes three carbon atoms or less, and includes at least one alpha hydrogen atom in its molecular structure. A representative example of the carbonyl compound in the present disclosure is aldehyde or ketone having a structure represented by Formula (1) below.

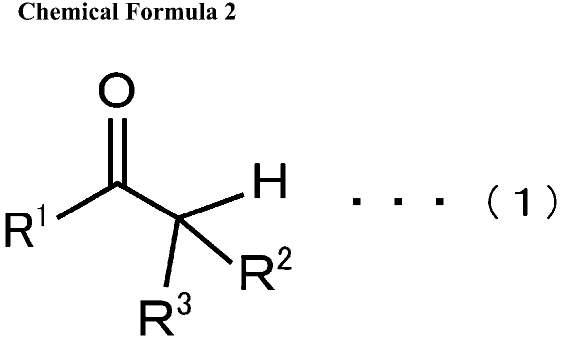

In Formula (1), each of R¹, R², and R³ is independently an atom or an atomic group selected from the group consisting of a hydrogen atom (H), a fluorine atom (F), a chlorine atom (Cl), a bromine atom (Br), an iodine atom (I), a methyl group (CH₃), a trifluoromethyl group (CF₃), a methoxy group (OCH₃), a methyl sulfide group (SCH₃), and an amino group (NH₂).

In other words, in Formula (1), each of R¹, R², and R³ may be independently a hydrogen atom (H), or a hydrogen atom substituted with a substituent selected from the group consisting of F, Cl, Br, I, CH₃, CF₃, OCH₃, SCH₃, and NH₂.

Especially in aldehyde or ketone represented by Formula (1), each of R² and R³ may be an atom or an atomic group selected from the group consisting of H, CH₃, OCH₃, SCH₃, and NH₂. Thus, the carbonyl compound can effectively serve as the carbene scavenger depending on various conditions.

An especially representative compound among the carbonyl compounds represented by Formula (1) above is ketone in which: R¹ is a methyl group (CH₃) or a trifluoromethyl group (CF₃); and both R² and R³ are hydrogen atoms (H), both R² and R³ are fluorine atoms (F), or each of R² and R³ is H or F.

Specific examples of the ketone include 1,1,1-trifluoroacetone (1,1,1-trifluoro-2-propanone, CF₃-CO-CH₃), 1,1,1,3,3-pentafluoroacetone (1,1,1,3,3-pentafluoro-2-propanone, CF₃-CO-CHF₂), 1,1,1,3-tetrafluoroacetone (1,1,1,3-tetrafluoro-2-propanone, CF₃-CO-CH₂F), and acetone (2-propanone, CH₃-CO-CH₃). However, the ketone is not especially limited.

Moreover, in the method of inhibiting the disproportionation reaction according to the present disclosure, the carbene that is a target captured by the carbene scavenger is not especially limited. A representative example of the carbene is at least one selected from the group consisting of CF₂, CHF, and CH₂. When one or more types of carbenes included in this group are generated by the self-decomposition of the fluoroolefin, these carbenes can be effectively captured by the above-described carbonyl compound (aldehyde or ketone).

The carbonyl compound as the carbene scavenger captures and reacts with the carbene to be converted into an ether compound. When the carbene to be captured is at least one selected from the group consisting of CF₂, CHF, and CH₂ described above, the ether compound generated (by conversion) is a compound in which: there are four carbon atoms or less; and at least one selected from the group consisting of a methyl group (CH₃), a monofluoromethyl group (CH₂F), and a difluoromethyl group (CHF₂) is included as a terminal substituent in its molecular structure.

In the present disclosure, when the carbene scavenger is the carbonyl compound having the structure represented by Formula (1) above, one example of the ether compound generated (by conversion) when the carbonyl compound captures the carbene is a compound having a structure represented by Formula (2) below.

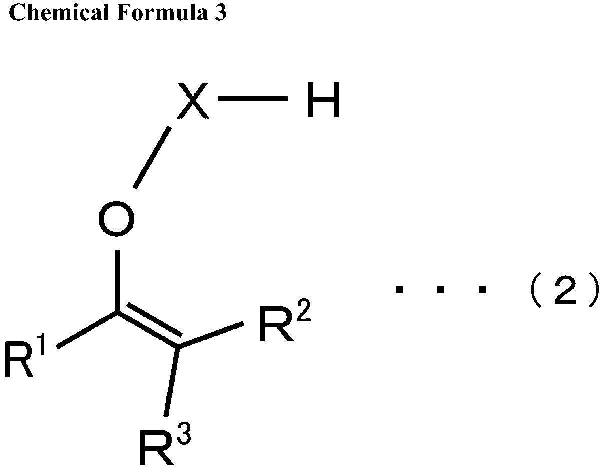

As with R¹, R², and R³ in Formula (1), each of R¹, R², and R³ in Formula (2) is independently an atom or an atomic group selected from the group consisting of H, F, Cl, Br, I, CH₃, CF₃, OCH₃, SCH₃, and NH₂. Moreover, in Formula (2), X is an organic group derived from the carbene.

For example, the carbonyl compound (carbene scavenger) represented by Formula (1) above captures CF₂, CHF, or CH₂ as the carbene, and thus, the ether compound represented by Formula (2) above is generated. In this case, in Formula (2) above, X is CF₂, CHF, or CH₂.

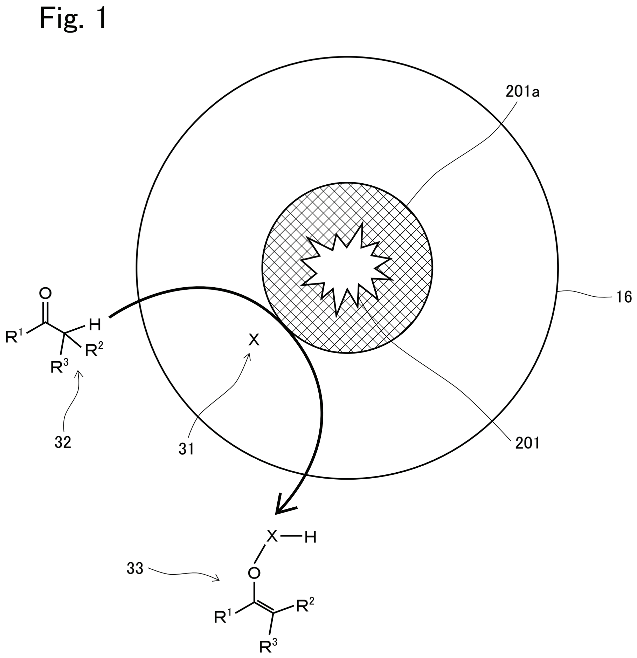

The chemical reaction (carbene capturing reaction) in which the carbonyl compound captures the carbene to be converted into the ether compound as above and the inhibition of the disproportionation reaction of the fluoroolefin by this chemical reaction will be specifically described with reference to FIG. 1.

First, the process in which the disproportionation reaction of the fluoroolefin rapidly proceeds can be divided into an initial stage, an induction stage, and a chain-progression stage. In the initial stage, for example, the first self-decomposition of the fluoroolefin occurs by a trigger that is the generation of the electric discharge in a compressor 16. At this time, the active radicals tend to be generated. The induction stage is immediately after the initial stage and immediately before the chain-progression stage, i.e., immediately before the self-decomposition of the fluoroolefin proceeds explosively. In this stage, the carbenes are gradually generated and accumulate. It is thought that when the concentration of the carbene exceeds an upper limit in this induction stage, the self-decomposition reaction of the fluoroolefin rapidly proceeds.

Therefore, even when the active radicals are captured by the radical scavenger and thereby eliminated in the initial stage, the carbenes gradually accumulate in the induction stage. When the concentration of the carbene exceeds a predetermined value (critical condition), the process proceeds to the chain-progression stage, and the self-decomposition of the fluoroolefin proceeds explosively.

Herein, the method of inhibiting the disproportionation reaction of the refrigeration-cycle working medium according to the present disclosure is schematically illustrated as shown in, for example, FIG. 1. In FIG. 1, the compressor 16 is schematically illustrated as a large circle, and a site of the generation of the electric discharge that is one of triggers of the disproportionation reaction (the self-decomposition reaction of the fluoroolefin) in the compressor 16 is schematically illustrated as an electric discharge region 201 located at a center portion of the compressor 16 illustrated schematically.

The temperature of the electric discharge region 201 is assumed to be about 3,000 K to 10,000 K. A region 201a shown by shading in FIG. 1 and having a temperature of about 400 K to 1,000 K is generated around the electric discharge region 201. In the region 201a, products generated by the self-decomposition of the fluoroolefin accumulate. The products are not the final products of the self-decomposition reaction and can be regarded as "intermediates." Therefore, for convenience of explanation, this region 201a is referred to as a reaction intermediates accumulating region 201a. In FIG. 1, a carbene 31 is shown by X. The carbenes 31 gradually accumulate in the reaction intermediates accumulating region 201a.

According to the studies by the present inventors, as described above, it was found that: in the initial stage of the self-decomposition of the fluoroolefin, the generation of the active radicals is predominant; and in the next induction stage, the carbenes are gradually generated. Therefore, in the present disclosure, it was uniquely found that to inhibit the chain progression of the self-decomposition of the fluoroolefin, setting the concentration of the carbene accumulating in the induction stage to the predetermined value or less is important.

Therefore, in the present disclosure, as the carbene scavenger, the refrigeration-cycle working medium contains, for example, a carbonyl compound 32 (aldehyde or ketone) having a structure represented by Formula (1) above. The carbonyl compound 32 has high reactivity with the carbene 31 but has relatively low reactivity with other substances existing in the refrigeration cycle including the reaction intermediates accumulating region 201a. Therefore, the carbonyl compound 32 captures and reacts with the carbene 31, and this generates an ether compound 33. This ether compound is a singlet ground-state molecule which does not include an unpaired electron. Thus, the increase of the carbene 31 is effectively inhibited, and therefore, the chain progression of the self-decomposition of the fluoroolefin is inhibited or avoided. As a result, the disproportionation reaction can be effectively inhibited or mitigated.

Moreover, according to the diligent studies by the present inventors, it was found that in the compressor, the carbene tends to be generated in not only the above-described electric discharge region 201 but also a region where a slide portion exists. Herein, the "slide portion" denotes a site where a plurality of slide members slide in a state where sliding surfaces thereof are in contact with each other.

When the ease of generation of the carbene is evaluated along a time axis, as described above, the carbene tends to be generated, for example, immediately after the occurrence of the electric discharge that is the trigger of the self-decomposition, after the radicals generated by the self-decomposition are eliminated, or immediately before the chain self-decomposition proceeds. Moreover, when the ease of generation of the carbene is evaluated based on regions in the compressor, the carbene tends to be generated, of course, in the region where the electric discharge that is the trigger of the self-decomposition may be generated, i.e., the electric discharge region (see FIG. 1). Furthermore, it was found that the carbene tends to be generated at the site, such as the slide portion, where the temperature and the pressure are high in the compressor and its vicinity.

In the present disclosure, the region where the slide portion exists in the compressor is referred to as a "slide region." In the method of inhibiting the disproportionation reaction according to the present disclosure, the increase of the carbene may be inhibited in at least one of the electric discharge region or the slide region or in both the electric discharge region and the slide region.

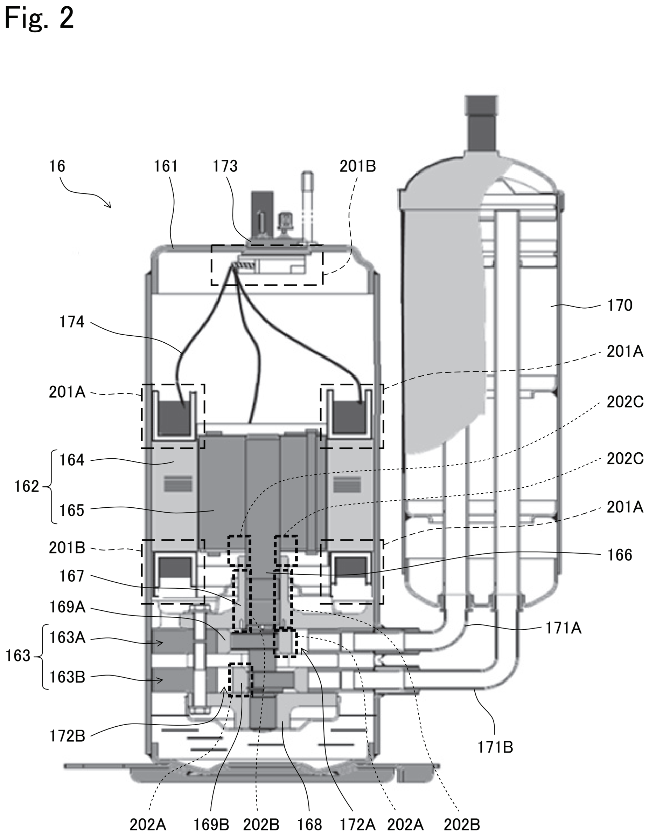

A representative example of the electric discharge region and a representative example of the slide region in the compressor will be specifically described with reference to FIG. 2. FIG. 2 shows a rotary (or scroll) compressor. Moreover, for convenience of explanation of the electric discharge region and the slide region, FIG. 2 shows only major elements related to these regions and does not show all major elements included in a typical compressor.

Moreover, the refrigeration cycle that is a target to which the method of inhibiting the disproportionation reaction according to the present disclosure is applied is not limited to a configuration including the rotary (or scroll) compressor shown in FIG. 2. Needless to say, the refrigeration cycle that is the target to which the present disclosure is applied may include a reciprocating compressor or another known type of compressor.

Similarly, in the present disclosure, regardless of whether or not the compressor is the rotary (or scroll) compressor, the elements included in the compressor are not limited to the major elements schematically illustrated in FIG. 2. In various known types of compressors, a site where the electric discharge may occur and its vicinity may be referred to as the "electric discharge region," and a site where the temperature and the pressure are high and its vicinity may be referred to as the "slide region" (or a high-temperature high-pressure region).

The compressor 16 according to the present embodiment shown in FIG. 2 includes an electric motor portion 162 and a compression mechanism portion 163 in a sealed container 161. The electric motor portion 162 and the compression mechanism portion 163 are coupled to each other by a shaft 166. The electric motor portion 162 includes at least a stator 164 and a rotor 165. The stator 164 is fixed to an inner surface of the sealed container 161. The rotor 165 rotates in the stator 164.

A hermetic power supply terminal 173 is hermetically welded to the sealed container 161. The hermetic power supply terminal 173 is electrically connected to an external power supply. Moreover, in the sealed container 161, the hermetic power supply terminal 173 is electrically connected to the stator 164 of the electric motor portion 162 through a wire 174. Thus, electric power is supplied from the external power supply to the electric motor portion 162.

As the compression mechanism portion 163, the compressor 16 includes a first compression mechanism portion 163A and a second compression mechanism portion 163B. The first compression mechanism portion 163A includes: a first piston 169A located in a first cylinder; and a vane that divides the inside of the first cylinder. When the first piston 169A revolves in the first cylinder, the first piston 169A draws in and compresses a low-pressure refrigerant gas (refrigeration-cycle working medium). A first compression chamber 172A is formed when the first piston 169A is located in the first cylinder so as to be able to revolve.

As with the first compression mechanism portion 163A, the second compression mechanism portion 163B also includes: a second piston 169B located in a second cylinder; and a vane that divides the inside of the second cylinder. When the second piston 169B revolves in the second cylinder, the second piston 169B draws in and compresses the low-pressure refrigerant gas (refrigeration-cycle working medium). A second compression chamber 172B is formed when the second piston 169B is located in the second cylinder so as to be able to revolve.

The shaft 166 fixes the rotor 165 and is rotatably supported by a main bearing 167 and an auxiliary bearing 168. Moreover, the first piston 169A and the second piston 169B are fixed to the shaft 166 with a phase difference of 180 degrees.

Lubricating oil is stored in a bottom portion in the sealed container 161. This lubricating oil lubricates, through an oil supply passage formed in the shaft 166, the slide portion formed by the shaft 166 and the main bearing 167 or the slide portion formed by the shaft 166 and the auxiliary bearing 168.

A first suction pipe 171A and a second suction pipe 171B are connected to a side surface of the sealed container 161. The first suction pipe 171A is connected to the first compression chamber 172A, and the second suction pipe 171B is connected to the second compression chamber 172B. An accumulator 170 is located upstream of the first suction pipe 171A and the second suction pipe 171B. The accumulator 170 separates a refrigerant, which has returned from the refrigeration cycle and is in a gas-liquid mixed state, into a liquid refrigerant and a gas refrigerant. The gas refrigerant flows through the first suction pipe 171A and the second suction pipe 171B.

By the rotation of the shaft 166, the first piston 169A revolves in the first compression chamber 172A, and the second piston 169B revolves in the second compression chamber 172B. By the revolutions of the first piston 169A and the second piston 169B, the gas refrigerant drawn from the first suction pipe 171A and the second suction pipe 171B into the first compression chamber 172A and the second compression chamber 172B is compressed in the first compression chamber 172A and the second compression chamber 172B. Then, the gas refrigerant is discharged into the sealed container 161. While the gas refrigerant moves upward through the electric motor portion 162, the lubricating oil is separated from the gas refrigerant, and the gas refrigerant is discharged to the outside of the sealed container 161 from a discharge pipe.

In the configuration example shown in FIG. 2, electric discharge regions 201A and 201B in the compressor 16 are regions surrounded by dashed-line frames, and the slide region is a region surrounded by a dotted-line frame. Among these, the electric discharge region 201A indicates a winding wire portion of the stator 164 constituting the electric motor portion 162 and its vicinity, and the electric discharge region 201B indicates the hermetic power supply terminal 173 and its vicinity.

On the other hand, in the configuration example shown in FIG. 2, examples of the slide portion (site where the slide members are combined with each other and slide in a state where the sliding surfaces thereof are in contact with each other) which tends to become high in temperature and pressure in the compressor 16 include: a portion between the first piston 169A and the vane; a portion between the second piston 169B and the vane; a portion between the main bearing 167 and the shaft 166; and a portion between the rotor 165 and the main bearing 167.

Therefore, for example, in FIG. 2, a combination of the portion between the first piston 169A and the vane and its vicinity and a combination of the portion between the second piston 169B and the vane and its vicinity are shown as respective slide regions 202A surrounded by the dotted-line frames. Similarly, a combination of the portion between the main bearing 167 and the shaft 166 and its vicinity is shown as a slide region 202B (region surrounded by the dotted-line frame), and a combination of the portion between the rotor 165 and the main bearing 167 and its vicinity is shown as a slide region 202C (region surrounded by the dotted line).

In the present disclosure, the increase of the carbene may be inhibited by the carbonyl compound that is the carbene scavenger in the refrigeration cycle including the compressor 16. Moreover, in the compressor 16 in the refrigeration cycle, the increase of the carbene may be inhibited by the carbene scavenger (carbonyl compound) in at least one of the electric discharge region 201A, the electric discharge region 201B, the slide region 202A, the slide region 202B, or the slide region 202C.

Especially, when the increase of the carbene can be inhibited by the carbene scavenger (carbonyl compound) in the electric discharge regions 201A and 201B, an allowable value of the electric discharge energy can be increased, i.e., the value of the electric discharge energy at which the self-decomposition of the fluoroolefin does not proceed in a chain manner can be increased. Therefore, the disproportionation reaction can be further effectively inhibited or mitigated.

In the example shown in FIG. 2, two electric discharge regions and three slide regions are illustrated in the compressor 16. However, the number of electric discharge regions and the number of slide regions in the present disclosure are not limited to those in the example shown in FIG. 2. The number of electric discharge regions in the compressor 16 may be plural, and the number of slide regions may be one. In the present disclosure, "at least one of the electric discharge region or the slide region" denotes at least one region when there are a plurality of electric discharge regions and a plurality of slide regions in the compressor 16. Moreover, examples of "at least one of the electric discharge region or the slide region" include: only one or more electric discharge regions; only one or more slide regions; and all the electric discharge regions and the slide regions.

In the method of inhibiting the disproportionation reaction of the refrigeration-cycle working medium according to the present disclosure, the increase of the carbene in the refrigeration cycle may be inhibited by the above-described carbene scavenger, and as a result, the disproportionation reaction of the fluoroolefin contained in the refrigeration-cycle working medium may be inhibited or mitigated. Therefore, in the present disclosure, the upper limit of the concentration of the carbene in the refrigeration cycle is set in advance to inhibit the increase of the carbene, and it can be determined that when the concentration of the carbene falls below the upper limit by the carbene scavenger, the increase of the carbene is inhibited.

Alternatively, in the present disclosure, when it is confirmed that the concentration of the carbene in the refrigeration cycle is practically zero, it can be determined that the increase of the carbene has been inhibited. To be specific, when the concentration of the carbene in the refrigeration cycle decreases to such a degree that the carbene is regarded as an impurity in the refrigeration-cycle working medium, and the carbene is not practically contained, the concentration of the carbene is regarded as practically zero, and it can be determined that the concentration of the carbene has been inhibited.

The upper limit of the concentration of the carbene is suitably set in accordance with various conditions including specific configurations of the refrigeration cycle and the compressor. However, the upper limit is not especially limited. A representative example of the upper limit of the concentration of the carbene may be set such that the mole fraction of the carbene is 0.35 (mol/mol) or less in at least one of the electric discharge region or the slide region.

According to the studies using simulations by the present inventors, it was found that when the mole fraction of the carbene is 0.35 or less, the disproportionation reaction can be inhibited. As described above, since the carbene tends to be generated in the electric discharge region and the slide region, the upper limit of the concentration of the carbene is set to the mole fraction of 0.35 or less in at least one of at least the electric discharge region or the slide region, and the carbene scavenger is added such that the concentration falls below the upper limit. Thus, the disproportionation reaction of the fluoroolefin can be effectively inhibited or mitigated.

Moreover, in the present disclosure, in addition to the upper limit of the concentration of the carbene, the increase of the carbene can be inhibited by reducing the temperature or the pressure at which the carbene tends to be generated by the self-decomposition of the fluoroolefin.

For example, in the present disclosure, the increase of the carbene may be inhibited by controlling the temperature in at least one of the electric discharge region or the slide region to 700 K or less. Or, the increase of the carbene may be inhibited by controlling the pressure in at least one of the electric discharge region or the slide region from the high-temperature high-pressure state to 2 MPa or less.

When, in the electric discharge region or the slide region, the upper limit of the temperature is set to 700 K or less, or the upper limit of the pressure is set to 2 MPa or less, the high-temperature high-pressure condition required for the occurrence of the self-decomposition reaction of the fluoroolefin and the propagation of the spontaneous self-decomposition reaction are not adequately satisfied. As a result, even if the self-decomposition of the fluoroolefin occurs, the generation of the carbene is significantly inhibited. As a result, the increase of the carbene can be effectively inhibited in the electric discharge region or the slide region.

The present disclosure includes not only the method of inhibiting the disproportionation reaction of the refrigeration-cycle working medium but also a method of capturing the carbene existing in the refrigeration cycle. Specifically, the method of capturing the carbene according to the present disclosure may be configured such that: in the refrigeration cycle including the refrigeration-cycle composition, the refrigeration-cycle composition contains the carbonyl compound including, in its chemical structure, a carbon-oxygen double bond (C=O bond) that reacts with the carbene and at least one alpha hydrogen atom; and the carbonyl compound reacts with the carbene existing in the refrigeration cycle to capture the carbene existing in the refrigeration cycle.

In the refrigeration-cycle working medium according to the present disclosure, the content of the carbonyl compound as the carbene scavenger is not especially limited. The carbonyl compound can be contained in any percentage depending on a specific composition of the refrigeration-cycle working medium, a specific configuration of the refrigeration cycle (including the compressor) to which the refrigeration-cycle working medium is applied, and various conditions, such as a use condition of the refrigeration cycle, as long as the functions of the refrigeration-cycle working medium and the refrigeration cycle are not impaired.

As a representative example, based on the content of the fluoroolefin contained in the refrigeration-cycle working medium, the carbonyl compound (carbene scavenger) may be contained in the refrigeration-cycle working medium in an amount of 50 parts by mass or less relative to 100 parts by mass of the fluoroolefin. When the content of the carbonyl compound is this upper limit or less, the disproportionation reaction of the fluoroolefin in the refrigeration-cycle working medium can be effectively inhibited or mitigated depending on various conditions.

Moreover, when the carbonyl compound is a compound having the structure represented by Formula (1) above, and each of R² and R³ in Formula (1) is independently an atom or an atomic group selected from the group consisting of H, CH₃, OCH₃, SCH₃, and NH₂, the carbonyl compound may be contained in the refrigeration-cycle working medium in an amount of 20 parts by mass or less relative to 100 parts by mass of the fluoroolefin. When each of R² and R³ in the carbonyl compound represented by Formula (1) is the atom or the atomic group selected from the above group, the carbonyl compound can be expected to more effectively capture the carbene, and therefore, the relative content thereof can be reduced.

The composition of the refrigeration-cycle working medium according to the present disclosure other than the carbene scavenger will be described later. To be specific, the content of the fluoroolefin as the refrigerant component, components other than the refrigerant component and the carbene scavenger, the contents of those components, and the like will be described later.

As described above, in the refrigeration-cycle working medium and the method of inhibiting the disproportionation reaction according to the present disclosure, the carbonyl compound that is propionaldehyde, acetone, cyclopropanone, acetaldehyde, or a derivative of any of these compounds which includes three carbon atoms or less, and includes at least one alpha hydrogen atom in its molecular structure is added as the carbene scavenger to the refrigerant component containing the fluoroolefin as the main component.

As described above, according to the diligent studies by the present inventors, it was found that the carbene generated in association with the self-decomposition is involved in the chain progression of the disproportionation reaction of the fluoroolefin. Therefore, the carbene is captured by the carbonyl compound that is the carbene scavenger, and this can effectively inhibit the increase of the carbene in the refrigeration cycle. Thus, the disproportionation reaction of the fluoroolefin can be inhibited or mitigated.

Moreover, in the refrigeration-cycle working medium and the method of inhibiting the disproportionation reaction according to the present disclosure, the fluoroolefin has the self-decomposing property, but the carbonyl compound that is the carbene scavenger does not have the self-decomposing property. Therefore, when the carbonyl compound is contained in the refrigeration-cycle working medium, the stability of the working medium can be made relatively high. Moreover, when an electron-donating property of the substituent included in the molecular structure of the carbonyl compound is higher, a higher effect of inhibiting or mitigating the disproportionation reaction can be expected even if the content of the carbonyl compound is small (the concentration is low).

### Configuration Example of Refrigeration Cycle System

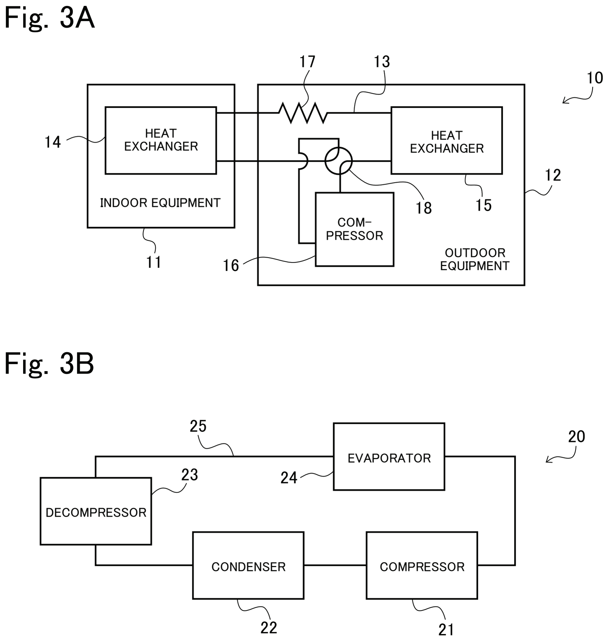

Next, the refrigeration cycle to which the method of inhibiting the disproportionation reaction of the refrigeration-cycle working medium according to the present disclosure is applied will be described with reference to representative "refrigeration cycle systems (refrigeration cycle apparatuses)" shown in FIGS. 3A and 3B.

A specific configuration of the refrigeration cycle system according to the present disclosure is not especially limited and may be such a configuration that elements, such as a compressor, a condenser, an expander, and an evaporator, are connected to each other through a pipe. Specific application examples of the refrigeration cycle system according to the present disclosure are not especially limited and include air-conditioning equipment (air conditioner), a refrigerator (home use, business use), a dehumidifier, a showcase, an ice maker, a heat pump water heater, a heat pump washing/drying machine, and a vending machine.

The air-conditioning equipment will be described as a representative application example of the refrigeration cycle system according to the present disclosure. Specifically, as schematically shown in a block diagram of FIG. 3A, air-conditioning equipment 10 according to the present embodiment includes indoor equipment 11, outdoor equipment 12, and a pipe 13 connecting the indoor equipment 11 and the outdoor equipment 12. The indoor equipment 11 includes a heat exchanger 14, and the outdoor equipment 12 includes a heat exchanger 15, the compressor 16, and a decompressor 17.

The heat exchanger 14 of the indoor equipment 11 and the heat exchanger 15 of the outdoor equipment 12 are annularly connected to each other by the pipe 13, and this forms the refrigeration cycle according to the present disclosure. Specifically, the heat exchanger 14 of the indoor equipment 11, the compressor 16, the heat exchanger 15 of the outdoor equipment 12, and the decompressor 17 are annularly connected to each other in this order by the pipe 13. Moreover, a four-way valve 18 for switching between cooling and heating is located at the pipe 13 that connects the heat exchanger 14, the compressor 16, and the heat exchanger 15 to each other. The indoor equipment 11 includes a fan, a temperature sensor, an operating device, and the like which are not shown, and the outdoor equipment 12 includes a blower, an accumulator, and the like which are not shown. Furthermore, various valve devices (including the four-way valve 18), a strainer, and the like which are not shown are located at the pipe 13.

The heat exchanger 14 included in the indoor equipment 11 performs heat exchange between indoor air taken into the indoor equipment 11 by the fan and a refrigerant flowing inside the heat exchanger 14. At the time of the heating, the indoor equipment 11 sends air, which has been heated by the heat exchange, to an indoor side. At the time of the cooling, the indoor equipment 11 sends air, which has been cooled by the heat exchange, to the indoor side. The heat exchanger 15 included in the outdoor equipment 12 performs heat exchange between outside air taken into the outdoor equipment 12 by the blower and a refrigerant flowing inside the heat exchanger 15.

Specific configurations of the indoor equipment 11 and the outdoor equipment 12 or specific configurations of the heat exchanger 14, the heat exchanger 15, the compressor 16, the decompressor 17, the four-way valve 18, the fan, the temperature sensor, the operating device, the blower, the accumulator, the other valve devices, the strainer, and the like are not especially limited, and known configurations can be suitably used.

One example of the operation of the air-conditioning equipment 10 shown in FIG. 3A will be specifically described. First, in a cooling operation or a dehumidifying operation, the compressor 16 of the outdoor equipment 12 compresses and discharges a gas refrigerant, and thus, the gas refrigerant is sent through the four-way valve 18 to the heat exchanger 15 of the outdoor equipment 12. Since the heat exchanger 15 performs the heat exchange between the outside air and the gas refrigerant, the gas refrigerant condenses into liquid. This liquid refrigerant is decompressed by the decompressor 17 and is sent to the heat exchanger 14 of the indoor equipment 11. In the heat exchanger 14, the liquid refrigerant vaporizes by the heat exchange with the indoor air to become the gas refrigerant. This gas refrigerant returns through the four-way valve 18 to the compressor 16 of the outdoor equipment 12. The compressor 16 compresses the gas refrigerant and discharges the gas refrigerant through the four-way valve 18 to the heat exchanger 15 again.

Moreover, in a heating operation, the compressor 16 of the outdoor equipment 12 compresses and discharges the gas refrigerant, and thus, the gas refrigerant is sent through the four-way valve 18 to the heat exchanger 14 of the indoor equipment 11. In the heat exchanger 14, the gas refrigerant condenses into liquid by the heat exchange with the indoor air. This liquid refrigerant is decompressed by the decompressor 17 to become a gas-liquid two-phase refrigerant, and the gas-liquid two-phase refrigerant is sent to the heat exchanger 15 of the outdoor equipment 12. Since the heat exchanger 15 performs the heat exchange between the outside air and the gas-liquid two-phase refrigerant, the gas-liquid two-phase refrigerant vaporizes to become the gas refrigerant, and the gas refrigerant returns to the compressor 16. The compressor 16 compresses the gas refrigerant and discharges the gas refrigerant through the four-way valve 18 to the heat exchanger 14 of the indoor equipment 11 again.

Moreover, a refrigerator will be described as another representative application example of the refrigeration cycle system (refrigeration cycle apparatus) according to the present disclosure. Specifically, for example, as schematically shown in a block diagram of FIG. 3B, a refrigerator 20 according to the present embodiment includes a compressor 21, a condenser 22, a decompressor 23, an evaporator 24, a pipe 25, and the like. Moreover, although not shown, the refrigerator 20 further includes a casing as a main body, a blower, an operating device, a controller, and the like.

The compressor 21 compresses a refrigerant gas to generate a high-temperature high-pressure gas refrigerant. The condenser 22 cools the refrigerant to liquefy the refrigerant. The decompressor 23 is constituted by, for example, a capillary tube and decompresses the liquefied refrigerant (liquid refrigerant). The evaporator 24 vaporizes the refrigerant to generate a low-temperature low-pressure gas refrigerant. The compressor 21, the condenser 22, the decompressor 23, and the evaporator 24 are annularly connected to each other in this order by the pipe 25 through which the refrigerant gas flows. Thus, the refrigeration cycle is configured.

Configurations of the compressor 21, the condenser 22, the decompressor 23, the evaporator 24, the pipe 25, the main body casing, the blower, the operating device, the controller, and the like are not especially limited, and known configurations can be suitably used. Moreover, the refrigerator 20 may include known configurations other than the above configurations.

One example of the operation of the refrigerator 20 shown in FIG. 3B will be specifically described. The compressor 21 compresses the gas refrigerant and discharges the gas refrigerant to the condenser 22. The condenser 22 cools the gas refrigerant to generate the liquid refrigerant. The liquid refrigerant is decompressed by passing through the decompressor 23, and is then sent to the evaporator 24. In the evaporator 24, the liquid refrigerant takes heat from surroundings to vaporize and become the gas refrigerant, and the gas refrigerant returns to the compressor 21. The compressor 21 compresses the gas refrigerant and discharges the gas refrigerant to the condenser 22 again.

Each of the air-conditioning equipment 10 and the refrigerator 20 is a configuration (refrigeration cycle system) including the refrigeration cycle configured by using the above-described refrigeration-cycle working medium. The fluoroolefin used in the refrigeration-cycle working medium has a satisfactory property as the refrigerant component and has a low ODP and a low GWP. In addition, as described above, the refrigeration-cycle working medium contains the carbonyl compound as the carbene scavenger.

Therefore, the carbene generated in association with the self-decomposition of the fluoroolefin is captured by the carbene scavenger. Thus, since the increase of the carbene can be effectively inhibited in the refrigeration cycle, the chain progression of the self-decomposition of the fluoroolefin can be inhibited or avoided. Therefore, the disproportionation reaction of the fluoroolefin can be inhibited or mitigated.

### Refrigeration-Cycle Working Medium and Refrigeration-Cycle Composition

The present disclosure also includes the refrigeration-cycle working medium which contains the above-described carbene scavenger. Specifically, as described above, the refrigeration-cycle working medium according to the present disclosure may contain: as the refrigerant component, the fluoroolefin that causes the disproportionation reaction; and the above-described carbonyl compound as the carbene scavenger that captures the carbene generated in association with the disproportionation reaction. Moreover, as described above, the specific carbene scavenger may be a component having higher reactivity with the carbene than the substances other than the carbene. A representative example of the compound is a singlet ground-state molecule including a π electron or a lone electron pair. More specific examples of the compound include ketones.

Moreover, the refrigeration-cycle working medium according to the present disclosure may include, as the refrigerant component, difluoromethane (HFC32, R32, chemical formula: CH2F2) in addition to the fluoroolefin. In this case, when the fluoroolefin is regarded as a "main component (main refrigerant component)" of the refrigerant component in the refrigeration-cycle working medium according to the present disclosure, the difluoromethane is regarded as a "subcomponent (sub-refrigerant component)" of the refrigerant component in the refrigeration-cycle working medium according to the present disclosure.

As described above, the difluoromethane has an ozone depletion potential (ODP) of zero and has a more satisfactory refrigerant performance than HCFC (hydrochlorofluorocarbon) that has been used so far.

Moreover, the refrigeration-cycle working medium according to the present disclosure may contain, as the sub-refrigerant component, a refrigerant component other than the difluoromethane. Examples of such sub-refrigerant component include: hydrofluorocarbons (HFCs), such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs), such as monofluoropropene, trifluoropropene, tetrafluoropropene, pentafluoropropene, and hexafluorobutene. However, the sub-refrigerant component is not especially limited.

Moreover, saturated hydrocarbon, such as ethane, n-propane, cyclopropane, n-butane, cyclobutane, isobutane (2-methylpropane), methylcyclopropane, n-pentane, isopentane (2-methylbutane), neopentane (2,2-dimethylpropane), or methylcyclobutane, carbon dioxide, or the like can be used as the sub-refrigerant component.

These sub-refrigerant components are known as being less likely to influence the ozone layer depletion and the global warming. Therefore, each of these sub-refrigerant components can be used as the refrigerant component together with the fluoroolefin or together with the fluoroolefin and the difluoromethane. Only one of the above-described refrigerant components may be used together, or a suitable combination of two or more of the above-described refrigerant components may be used together.

The content of the sub-refrigerant component is not especially limited. In the present disclosure, the fluoroolefin may be the main refrigerant component. Therefore, in the refrigeration-cycle working medium according to the present disclosure, the content of the fluoroolefin may be larger than the content of the sub-refrigerant component.

In the refrigeration-cycle working medium according to the present disclosure, it is important to lower the GWP as much as possible. Specifically, the GWP is desirably 200 or less (GWP ≤ 200) and is more desirably 150 or less (GWP ≤ 150). When the fluoroolefin is used as the main refrigerant component, and for example, the difluoromethane is used as the sub-refrigerant component, the upper limit of the content of the difluoromethane may be 30 mass % or less of a refrigerant related component total amount, 25 mass % or less of the refrigerant related component total amount, or 20 mass % or less of the refrigerant related component total amount.

When the content of the difluoromethane is 30 mass % or less, the GWP of the refrigeration-cycle working medium can be set to 200 or less. When the content of the difluoromethane is 20 mass % or less, the GWP of the refrigeration-cycle working medium can be set to 150 or less. The lower limit of the difluoromethane is not especially limited. In the refrigeration-cycle working medium according to the present disclosure, the difluoromethane does not have to be contained, and therefore, the content of the difluoromethane may be 0 mass % or more.

Moreover, in the present disclosure, the refrigeration-cycle working medium may contain a disproportionation inhibitor in addition to the carbene scavenger. Examples of the disproportionation inhibitor include saturated hydrocarbon and haloalkane.

As the saturated hydrocarbon, there are compounds including 2 to 5 carbon atoms, such as ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. Only one of these saturated hydrocarbons may be used, or a suitable combination of two or more of the saturated hydrocarbons may be used. Among these saturated hydrocarbons, a representative example is n-propane.

The haloalkane as the disproportionation inhibitor is not especially limited as long as the haloalkane has a disproportionation inhibiting effect. A representative example of the haloalkane is haloalkane including one or two carbon atoms. Specifically, examples of the haloalkane include: haloalkane including two carbon atoms, i.e., haloethane (halogenated ethane); and haloalkane including one carbon atom, i.e., halomethane (halogenated methane).

Specifically, the halomethane among the haloalkanes including one or two carbon atoms may have a structure represented by Formula (1) below.

CHₘXₙ ... (1)

In Formula (1), X denotes halogen atoms selected from the group consisting of fluorine (F), chlorine (Cl), bromine (Br), and iodine (I), m is an integer of 0 or more, n is an integer of 1 or more, and the sum of m and n is 4. When n is 2 or more, the halogen atoms X are the same in type as each other or different in type from each other.

To be specific, the halomethane represented by Formula (1) may be at least one of monohalomethane represented by Formula (11) below, dihalomethane represented by Formula (12) below, trihalomethane represented by Formula (13) below, or tetrahalomethane represented by Formula (14) below. Each of X¹, X², X³, and X⁴ in the halomethanes represented by Formulas (11) to (14) independently denotes one halogen atom. Therefore, X¹ to X⁴ may be halogen atoms that are different in type from each other, may be halogen atoms among which at least two halogen atoms are the same in type as each other, and the other halogen atoms are different in type from each other, or may be halogen atoms that are the same in type as each other.

CH₃X¹ ... (11)

CH₂X¹X² ... (12)

CHX¹X²X³ ... (13)

CX¹X²X³X⁴ ... (14)

Specific examples of the halomethane represented by Formula (1) include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), difluoroiodomethane (CHF₂I), fluorodiiodomethane (CHFI₂), difluorodiiodomethane (CF₂I₂), dibromodifluoromethane (CBr₂F₂), and trifluoroiodomethane (CF₃I). However, the halomethane represented by Formula (1) is not especially limited. Only one of these halomethanes may be used, or a suitable combination of two or more of the halomethanes may be used.

Specifically, the haloethane among the haloalkanes including one or two carbon atoms may have a structure represented by Formula (2) below.

C₂HₚX_{q} ... (2)

As with the above halomethane, in Formula (2), X denotes halogen atoms selected from the group consisting of F, Cl, Br, and I, p is an integer of 0 or more, q is an integer of 1 or more, the sum of p and q is 6, and when q is 2 or more, the halogen atoms X are the same in type as each other or different in type from each other.

To be specific, the haloethane represented by Formula (2) may be at least one of monohaloethane represented by Formula (21) below, dihaloethane represented by Formula (22) below, trihaloethane represented by Formula (23) below, tetrahaloethane represented by Formula (24) below, pentahaloethane represented by Formula (25) below, or hexahaloethane represented by Formula (26) below.

Each of X¹, X², X³, X⁴, X⁵, and X⁶ in the haloethanes represented by Formulas (21) to (26) independently denotes one halogen atom. Therefore, X¹ to X⁶ may be halogen atoms that are different in type from each other, may be halogen atoms among which at least two halogen atoms are the same in type as each other, and the other halogen atoms are different in type from each other, or may be halogen atoms that are the same in type as each other.

CH₂X¹CH₃ ... (21)

CHX¹X²CH₃ ... (22)

CX¹X²X³CH₃ ... (23)

CX¹X²X³CH₂X⁴ ... (24)

CX¹X²X³CHX⁴X⁵ ... (25)

CX¹X²X³CX⁴X⁵X⁶ ... (26)

The specific haloethane represented by Formula (2) is not especially limited. Examples of the haloethane represented by Formula (2) include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). Only one of these haloethanes may be used, or a suitable combination of two or more of the haloethanes may be used.

Since the refrigeration-cycle working medium according to the present disclosure is used in the refrigeration cycle system, the refrigeration-cycle working medium can be used together with lubricating oil (freezer oil) that lubricates the compressor included in the refrigeration cycle system.

As described above, in the refrigeration-cycle working medium according to the present disclosure, the fluoroolefin (1,1,2-trifluoroethylene, for example) that causes the disproportionation reaction and the difluoromethane are used together as the refrigerant component, and the carbene scavenger may be further contained. Moreover, in the present disclosure, when the refrigeration-cycle working medium is used together with the lubricating oil, it can be regarded that a refrigeration-cycle composition (or a working medium-containing composition) is constituted by the refrigerant component, the carbene scavenger, the lubricating oil component, and other components. In the refrigeration-cycle working medium according to the present disclosure, the carbene scavenger may be mixed with the refrigerant component. However, the carbene scavenger may be mixed with the lubricating oil component depending on the situation.

As the lubricating oil component included in the refrigeration-cycle composition (the lubricating oil component used together with the refrigeration-cycle working medium), various lubricating oils known in the refrigeration cycle systems can be suitably used. Specific examples of the lubricating oil include ester lubricating oil, ether lubricating oil, glycol lubricating oil, alkylbenzene lubricating oil, fluorine lubricating oil, mineral oil, and hydrocarbon synthetic oil. However, the lubricating oil is not especially limited. Only one of these lubricating oils may be used, or a suitable combination of two or more of the lubricating oils may be used.

Moreover, various known additives other than the disproportionation inhibitor may be added to the refrigeration-cycle composition. Specific examples of the additives include various stabilizing agents, an oxidation inhibitor, a moisture scavenger, a metal deactivator, an abrasion preventing agent, an antifoaming agent, and a leak detection substance. However, the additive is not especially limited. The oxidation inhibitor is used to improve heat stability, oxidation resistance, chemical stability, and the like of the refrigerant component or the lubricating oil. The moisture scavenger is used to, when moisture enters the refrigeration cycle system, remove the moisture and especially inhibit a property change of the lubricating oil. The metal deactivator is used to inhibit or prevent a chemical reaction caused by catalysis of a metal component. The abrasion preventing agent is used to reduce wear at the slide portion in the compressor, especially wear during an operation in which pressure is high. The antifoaming agent is used to especially inhibit the generation of air bubbles in the lubricating oil.

Specific types of these additives are not especially limited, and known compounds and the like may be suitably used depending on various conditions. Moreover, as the additive, only one of the compounds and the like may be used, or a suitable combination of two or more of the compounds and the like may be used. Furthermore, the amount of additive added is not especially limited. A known amount of additive may be added as long as the property of the refrigeration-cycle working medium according to the present disclosure is not spoiled, or the property of the refrigeration-cycle composition containing the refrigeration-cycle working medium is not spoiled.

In other words, as described above, the refrigeration-cycle composition according to the present disclosure may contain: the refrigerant component that causes the disproportionation reaction; and the carbonyl compound having the carbon-oxygen double bond (C=O bond) and at least one alpha hydrogen atom in the chemical structure. The carbonyl compound may be propionaldehyde, acetone, cyclopropanone, acetaldehyde, or a derivative of any of these compounds which includes three carbon atoms or less, or may be aldehyde or ketone having the structure represented by Formula (1) above.

Or, the carbonyl compound having the structure represented by Formula (1) may be aldehyde or ketone in which, in Formula (1), each R is independently an atom or an atomic group selected from the group consisting of H, CH₃, OCH₃, SCH₃, and NH₂, and the carbonyl compound may be contained in an amount of 20 parts by mass or less relative to 100 parts by mass of the ethylene based fluoroolefin. Or, the carbonyl compound may be 1,1,1-trifluoroacetone (CF₃-CO-CH₃), 1,1,1,3,3-pentafluoroacetone (CF₃-CO-CHF₂), 1,1,1,3-tetrafluoroacetone (CF₃-CO-CH₂F), or acetone (CH₃-CO-CH₃).

Moreover, the refrigeration-cycle composition according to the present disclosure may further include ethylene based fluoroolefin. The ethylene based fluoroolefin may be 1,1,2-trifluoroethylene, trans-1,2-difluoroethylene, cis-1,2-difluoroethylene, 1,1-difluoroethylene, tetrafluoroethylene, or monofluoroethylene. However, the ethylene based fluoroolefin is not especially limited.

Moreover, the refrigeration-cycle composition according to the present disclosure may further include difluoromethane or may further include saturated hydrocarbon. The saturated hydrocarbon may contain n-propane. Furthermore, the refrigeration-cycle composition according to the present disclosure may contain haloalkane including one or two carbon atoms. Moreover, it can be said that the refrigeration cycle system (refrigeration cycle apparatus) contains (includes) the above refrigeration-cycle composition.

### Examples

The present invention will be more specifically described based on Examples and Comparative Examples. However, the present invention is not limited to these. A skilled person can make various modifications, corrections, and alterations within the scope of the present invention.

### Experimental System for Disproportionation Reaction

A pressure sensor, a thermocouple, and an electric discharger were attached to a sealed pressure-resistant container (internal volume of 50 mL). The pressure sensor measures internal pressure in the pressure-resistant container. The thermocouple measures an internal temperature in the pressure-resistant container. The electric discharger generates electric discharge in the pressure-resistant container.

Moreover, a gas bomb (HFO1123 gas bomb) of 1,1,2-trifluoroethylene (containing 5% of limonene (liquid phase) as a stabilizer) that was the refrigerant component was connected to the pressure-resistant container such that the pressure of the 1,1,2-trifluoroethylene was adjustable. The pressure sensor and the thermometer which were attached to the pressure-resistant container were connected to a data logger. Thus, an experimental system for the disproportionation reaction was constructed.

### Comparative Example

In the above experimental system, the 1,1,2-trifluoroethylene was introduced from the HFO1123 gas bomb into the pressure-resistant container. Therefore, in the refrigeration-cycle working medium in the pressure-resistant container, the content of the 1,1,2-trifluoroethylene was 100 mass %.

To induce the disproportionation reaction of the 1,1,2-trifluoroethylene, the electric discharger generated electric discharge at a discharge voltage of 100 V under conditions of the temperature of 25°C and the internal pressure of 1.3 MPa. Then, after the internal pressure and the internal temperature adequately lowered, the inside of the pressure-resistant container was confirmed. As a result, the generation of a considerable amount of soot was confirmed, and the occurrence of the disproportionation reaction of the 1,1,2-trifluoroethylene was confirmed.

### Example

In the experimental system, the 1,1,2-trifluoroethylene was introduced from the HFO1123 gas bomb into the pressure-resistant container. In addition, 1,1,1-trifluoroacetone (CF₃-CO-CH₃) was added as the disproportionation inhibitor such that the content becomes 9.7 mass %.

In the same manner as Comparative Example except for this, the electric discharge was generated in the pressure-resistant container. However, a significant pressure increase and a significant temperature increase were not observed. Then, the inside of the pressure-resistant container was inspected, but the occurrence of the disproportionation reaction of the 1,1,2-trifluoroethylene was not observed.

The present invention is not limited to the above-described embodiment and may be modified in various ways within the scope of the claims, and embodiments obtained by suitably combining technical means disclosed in different embodiments and/or plural modified examples are included in the technical scope of the present invention.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Additional Information

The present specification discloses the following technologies by the above embodiment.

### First Technology

A method of inhibiting a disproportionation reaction of a refrigeration-cycle working medium containing a refrigerant component that causes the disproportionation reaction, wherein
in a refrigeration cycle in which the refrigeration-cycle working medium circulates, the refrigeration-cycle working medium contains a carbonyl compound, and the carbonyl compound includes, in its chemical structure,
   a carbon-oxygen double bond (C=O bond) that reacts with a carbene and
   at least one alpha hydrogen atom,
the method including
inhibiting the disproportionation reaction of the refrigerant component in such a manner that the carbonyl compound captures the carbene generated by the disproportionation reaction of the refrigerant component.

### Second Technology

The method according to the first technology, wherein the carbonyl compound is propionaldehyde, acetone, cyclopropanone, acetaldehyde, or a derivative of any of these compounds which includes three carbon atoms or less.

### Third Technology

The method according to the first or second technology, wherein the carbene includes at least one selected from the group consisting of CF₂, CHF, and CH₂.

### Fourth Technology

The method according to any one of the first to third technologies, wherein:
the reaction between the carbonyl compound and the carbene includes converting the carbonyl compound into an ether compound; and
the ether compound includes four carbon atoms or less and includes, as a terminal substituent of its molecular structure, at least one selected from the group consisting of a methyl group (CH₃), a monofluoromethyl group (CH₂F), and a difluoromethyl group (CHF₂).

### Fifth Technology

The method according to any one of the first to fourth technologies, wherein:
inhibiting the disproportionation reaction of the refrigerant component includes inhibiting an increase of the carbene in the refrigeration cycle; and
inhibiting the increase of the carbene includes a process in which a concentration of the carbene falls below a preset upper limit of the concentration of the carbene or a process in which the concentration of the carbene is set to practically zero.

### Sixth Technology

The method according to any one of the first to fifth technologies, wherein:
the refrigeration cycle includes a compressor;
the compressor includes
   an electric discharge region where electric discharge occurs and
   a slide region including a slide portion where a plurality of slide members slide in a state where sliding surfaces thereof are in contact with each other; and
inhibiting the disproportionation reaction of the refrigerant component includes inhibiting an increase of the carbene existing in at least one of the electric discharge region or the slide region.

### Seventh Technology

The method according to the sixth technology, wherein a mole fraction of the carbene existing in at least one of the electric discharge region or the slide region is set to 0.35 or less.

### Eighth Technology

The method according to the seventh technology, wherein the increase of the carbene is inhibited by controlling a temperature in at least one of the electric discharge region or the slide region to 700 K or less.

### Ninth Technology

The method according to the seventh technology, wherein the increase of the carbene is inhibited by controlling pressure in at least one of the electric discharge region or the slide region from a high-temperature high-pressure state to 2 MPa or less.

### Tenth Technology

A method of capturing a carbene existing in a refrigeration cycle including a refrigeration-cycle composition, wherein
in the refrigeration cycle,
the refrigeration-cycle composition contains a carbonyl compound, and
the carbonyl compound includes, in its chemical structure,
   a carbon-oxygen double bond (C=O bond) that reacts with the carbene and
   at least one alpha hydrogen atom,
the method including
capturing the carbene existing in the refrigeration cycle in such a manner that the carbonyl compound reacts with the carbene existing in the refrigeration cycle.

### Eleventh Technology

A refrigeration-cycle composition including:
a refrigerant component that causes a disproportionation reaction; and
a carbonyl compound including, in its chemical structure,
   a carbon-oxygen double bond (C=O bond) and
   at least one alpha hydrogen atom.

### Twelfth Technology

The refrigeration-cycle composition according to the eleventh technology, wherein the carbonyl compound is propionaldehyde, acetone, cyclopropanone, acetaldehyde, or a derivative of any of these compounds which includes three carbon atoms or less.

### Thirteenth Technology

The refrigeration-cycle composition according to the eleventh or twelfth technology, wherein the carbonyl compound is aldehyde or ketone having a structure represented by Formula (1), 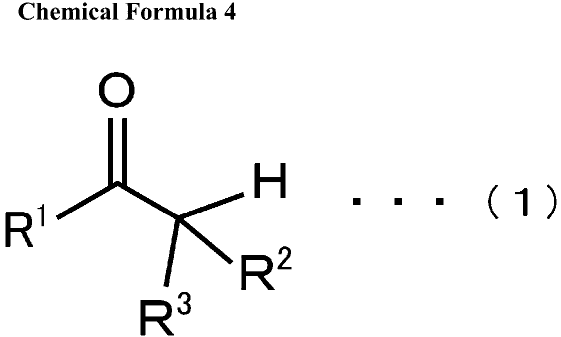 where each of R¹, R², and R³ is independently an atom or an atomic group selected from the group consisting of H, F, Cl, Br, I, CH₃, CF₃, OCH₃, SCH₃, and NH₂.

### Fourteenth Technology

The refrigeration-cycle composition according to any one of the eleventh to thirteenth technologies, wherein the refrigerant component is ethylene based fluoroolefin.

### Fifteenth Technology

The refrigeration-cycle composition according to the fourteenth technology, wherein the carbonyl compound is contained in an amount of 50 parts by mass or less relative to 100 parts by mass of the ethylene based fluoroolefin.

### Sixteenth Technology

The refrigeration-cycle composition according to the fourteenth or fifteenth technology, wherein:
the carbonyl compound is aldehyde or ketone in which each R in Formula (1) above is independently an atom or an atomic group selected from the group consisting of H, CH₃, OCH₃, SCH₃, and NH₂; and
the carbonyl compound is contained in an amount of 20 parts by mass or less relative to 100 parts by mass of the ethylene based fluoroolefin.

### Seventeenth Technology

The refrigeration-cycle composition according to any one of the eleventh to sixteenth technologies, wherein the carbonyl compound is 1,1,1-trifluoroacetone (CF₃-CO-CH₃), 1,1,1,3,3-pentafluoroacetone (CF₃-CO-CHF₂), 1,1,1,3-tetrafluoroacetone (CF₃-CO-CH₂F), or acetone (CH₃-CO-CH₃).

### Eighteenth Technology

The refrigeration-cycle composition according to any one of the eleventh to seventeenth technologies, further including saturated hydrocarbon.

### Nineteenth Technology

The refrigeration-cycle composition according to any one of the eleventh to eighteenth technologies, including haloalkane including one or two carbon atoms.

### Twentieth Technology

A refrigeration cycle apparatus including the refrigeration-cycle composition according to any one of the eleventh to nineteenth technologies.

### Industrial Applicability

The present invention can be suitably used in the field of a working medium used for a refrigeration cycle, and in addition, can be widely and suitably used in the field of a refrigeration cycle system, such as air-conditioning equipment (air conditioner), a refrigerator (home use, business use), a dehumidifier, a showcase, an ice maker, a heat pump water heater, a heat pump washing/drying machine, or a vending machine.

### Reference Signs List

- 10: air-conditioning equipment (refrigeration cycle system)
- 11: indoor equipment
- 12: outdoor equipment
- 13: pipe
- 14: heat exchanger
- 15: heat exchanger
- 16: compressor
- 17: decompressor
- 18: four-way valve
- 20: refrigerator (refrigeration cycle system)
- 21: compressor
- 22: condenser
- 23: decompressor
- 24: evaporator
- 25: pipe
- 31: carbene
- 32: carbonyl compound (carbene scavenger)
- 33: ether compound (singlet ground-state molecule)
- 161: sealed container
- 162: electric motor portion
- 163: compression mechanism portion
- 163A: first compression mechanism portion
- 163B: second compression mechanism portion
- 164: stator
- 165: rotor
- 166: shaft
- 167: main bearing
- 168: auxiliary bearing
- 169A: first piston
- 169B: second piston
- 170: accumulator
- 171A: first suction pipe
- 171B: second suction pipe
- 172A: first compression chamber
- 172B: second compression chamber
- 173: hermetic power supply terminal
- 174: wire
- 201: electric discharge region
- 201a: reaction intermediates accumulating region
- 201A: electric discharge region
- 201B: electric discharge region
- 202A: slide region
- 202B: slide region
- 202C: slide region

## Claims

1. A method of inhibiting a disproportionation reaction of a refrigeration-cycle working medium containing a refrigerant component that causes the disproportionation reaction, wherein
in a refrigeration cycle in which the refrigeration-cycle working medium circulates,
the refrigeration-cycle working medium contains a carbonyl compound, and
the carbonyl compound includes, in its chemical structure,
a carbon-oxygen double bond (C=O bond) that reacts with a carbene and
at least one alpha hydrogen atom,
the method comprising
inhibiting the disproportionation reaction of the refrigerant component in such a manner that the carbonyl compound captures the carbene generated by the disproportionation reaction of the refrigerant component.

2. The method according to claim 1, wherein the carbonyl compound is propionaldehyde, acetone, cyclopropanone, acetaldehyde, or a derivative of any of these compounds which includes three carbon atoms or less.

3. The method according to claim 1, wherein the carbene includes at least one selected from the group consisting of CF₂, CHF, and CH₂.

4. The method according to claim 1, wherein:
the reaction between the carbonyl compound and the carbene includes converting the carbonyl compound into an ether compound; and
the ether compound includes four carbon atoms or less and includes, as a terminal substituent of its molecular structure, at least one selected from the group consisting of a methyl group (CH₃), a monofluoromethyl group (CH₂F), and a difluoromethyl group (CHF₂).

5. The method according to claim 1 or 2, wherein:
inhibiting the disproportionation reaction of the refrigerant component includes inhibiting an increase of the carbene in the refrigeration cycle; and
inhibiting the increase of the carbene includes a process in which a concentration of the carbene falls below a preset upper limit of the concentration of the carbene or a process in which the concentration of the carbene is set to practically zero.

6. The method according to claim 1 or 2, wherein:
the refrigeration cycle includes a compressor;
the compressor includes
an electric discharge region where electric discharge occurs and
a slide region including a slide portion where a plurality of slide members slide in a state where sliding surfaces thereof are in contact with each other; and
inhibiting the disproportionation reaction of the refrigerant component includes inhibiting an increase of the carbene existing in at least one of the electric discharge region or the slide region.

7. The method according to claim 6, wherein a mole fraction of the carbene existing in at least one of the electric discharge region or the slide region is set to 0.35 or less.

8. The method according to claim 7, wherein the increase of the carbene is inhibited by controlling a temperature in at least one of the electric discharge region or the slide region to 700 K or less.

9. The method according to claim 7, wherein the increase of the carbene is inhibited by controlling pressure in at least one of the electric discharge region or the slide region from a high-temperature high-pressure state to 2 MPa or less.

10. A method of capturing a carbene existing in a refrigeration cycle including a refrigeration-cycle composition, wherein
in the refrigeration cycle,
the refrigeration-cycle composition contains a carbonyl compound, and
the carbonyl compound includes, in its chemical structure,
a carbon-oxygen double bond (C=O bond) that reacts with the carbene and
at least one alpha hydrogen atom,
the method comprising
capturing the carbene existing in the refrigeration cycle in such a manner that the carbonyl compound reacts with the carbene existing in the refrigeration cycle.

11. A refrigeration-cycle composition comprising:
a refrigerant component that causes a disproportionation reaction; and
a carbonyl compound including, in its chemical structure,
a carbon-oxygen double bond (C=O bond) and
at least one alpha hydrogen atom.

12. The refrigeration-cycle composition according to claim 11, wherein the carbonyl compound is propionaldehyde, acetone, cyclopropanone, acetaldehyde, or a derivative of any of these compounds which includes three carbon atoms or less.

13. The refrigeration-cycle composition according to claim 11, wherein the carbonyl compound is aldehyde or ketone having a structure represented by Formula (1), 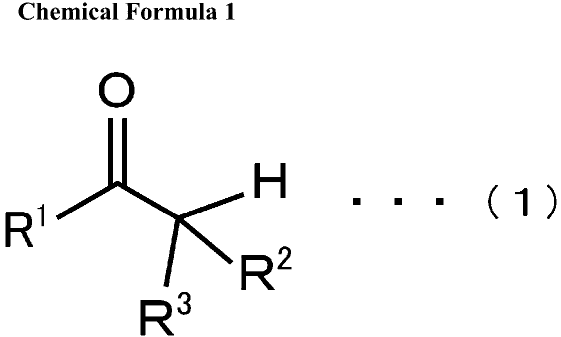 where each of R¹, R², and R³ is independently an atom or an atomic group selected from the group consisting of H, F, Cl, Br, I, CH₃, CF₃, OCH₃, SCH₃, and NH₂.

14. The refrigeration-cycle composition according to claim 11, wherein the refrigerant component is ethylene based fluoroolefin.

15. The refrigeration-cycle composition according to claim 14, wherein the carbonyl compound is contained in an amount of 50 parts by mass or less relative to 100 parts by mass of the ethylene based fluoroolefin.

16. The refrigeration-cycle composition according to claim 14, wherein:
the carbonyl compound is aldehyde or ketone in which each R in Formula (1) above is independently an atom or an atomic group selected from the group consisting of H, CH₃, OCH₃, SCH₃, and NH₂; and
the carbonyl compound is contained in an amount of 20 parts by mass or less relative to 100 parts by mass of the ethylene based fluoroolefin.

17. The refrigeration-cycle composition according to claim 11, wherein the carbonyl compound is 1,1,1-trifluoroacetone (CF₃-CO-CH₃), 1,1,1,3,3-pentafluoroacetone (CF₃-CO-CHF₂), 1,1,1,3-tetrafluoroacetone (CF₃-CO-CH₂F), or acetone (CH₃-CO-CH₃).

18. The refrigeration-cycle composition according to claim 11, further comprising saturated hydrocarbon.

19. The refrigeration-cycle composition according to claim 11, comprising haloalkane including one or two carbon atoms.

20. A refrigeration cycle apparatus comprising the refrigeration-cycle composition according to claim 11.
